# EUROPEAN PATENT SPECIFICATION

(11) **EP 3 283 232 B1**
(45) Date of publication and mention of the grant of the patent: **25.01.2023**
(21) Application number: 15716775.0
(22) Date of filing: 14.04.2015
(51) Int. Cl.: B05B 9/01, F16L 27/12, B05B 15/65, B05B 15/62

(54) **TELESCOPIC TUBE**
TELESKOPISCHES ROHR
TUBE TÉLESCOPIQUE

(43) Date of publication of application: 21.02.2018
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2015/058048
(87) International publication number: WO 2016/165743

(56) References cited:
- WO-A1-2006/075345
- DE-A1-102008 036 180
- NL-A- 7 707 962

## Description

The present invention relates generally to the field of telescopic tubes. More specifically, the present invention is related to a telescopic tube which is adapted to be locked in different lengths by means of a locking mechanism.

### Background

Telescopic tubes with rotating mechanisms are known in prior art. A known telescopic tube comprises multiple tube elements which are usually formed by metal tubes. A first end of a first tube element is coupled with a first end of a second tube element by clamping elements made of rubber in order to provide a frictional connection.

Disadvantageously, the holding force between said tube elements depends on the power of the user. For example, for irrigation purposes the known clamping technique is unsuitable because in case of high liquid pressure, the telescopic tube is extended uncontrollably. In addition, the telescopic coupling between the tube elements comprises multiple different parts (e.g. two tube elements, at least one nut and at least one clamping element). Therefore, manufacturing of said tube element is expensive.

An exemplary such arrangement is described by WO2006075345A1 which discloses an extensible hose assembly for a carpet, floor etc. cleaning machine. The machine includes a first conduit and a second conduit. The first conduit has at least one pair of substantially rigid tubular members coupled together in telescopically sliding manner. The second conduit is made of a material adapted to convey a working fluid at a predetermined maximum temperature.

Another example is provided by DE102008036180A1 which discloses a telescopic pipe for a vacuum cleaner has an inner tube and an outer tube. A clamping sleeve is mounted on the outer sleeve through rotational coupling. A radial space defined between the inner tube and the outer tube includes fixing sections. Locking positions may be formed in addition to the rotation stops. The angle of rotation of the clamping sleeve is determined both by the stops and by locking recesses. Specifically, the protrusions traverse over each other while in clamping action.

Yet another such example is described by NL7707962A which discloses a vacuum cleaner having two tube sections telescoping together. The two tube sections may be secured together in multiple relative positions by bayonet type couplings. One of the tube sections may have a row of lugs along a lengthwise direction, and other tube section may have one or more transverse grooves joining onto a lengthwise one. Alternatively, there can be a series of transverse grooves in one tube section, joined by a lengthwise one, while the other tube section may have a boss engaging in a selected groove.

### Summary of the invention

It is an objective of the embodiments of the invention to provide a telescopic tube which provides a solid and stable coupling between the tube elements with reduced manufacturing costs. The objective is solved by the features of the independent claim. Preferred embodiments are given in the dependent claims. According to the invention a telescopic tube comprises at least an outer and an inner tube element. The telescopic tube may comprise even more than two tube elements, wherein between the outer tube element (comprising the greatest tube diameter) and the inner tube element (comprising the smallest tube diameter) at least one further tube element (comprising a tube diameter between the greatest and the smallest tube diameter) is arranged. The outer tube element comprises at least one first clamping surface, said first clamping surface being arranged in a recess or groove within a first protrusion or on top of the first protrusion. Said first protrusion is provided at the inner wall side of the outer tube element, i.e. the first protrusion protrudes from the circular wall of the outer tube element into the interior of the outer tube element. The inner tube element comprises at least one second clamping surface, said second clamping surface being arranged in a recess or groove within at least one second protrusion or on top of said at least one second protrusion. Said second protrusion is provided at the outer wall side of the inner tube element, i.e. protrudes outwardly from the tube wall of the inner tube element. The second clamping surface is adapted to interact with the first clamping surface such that the tube elements are fixed against each other by clamping in a first turning position of the outer tube element with respect to the inner tube element (in the following also referred to as locked state) and are telescopable in a second turning position of the outer tube element with respect to the inner tube element (in the following also referred to as unlocked state). In addition, a first stop portion is provided at the inner wall side of the outer tube element, said first stop portion interacting with a second stop portion provided at the outer wall side of the inner tube element, said stop portions providing stop means to limit the angle of rotation by which the tube elements can be rotated relative to each other. Advantageously, in the clamped, locked state, by means of the clamping surfaces a rigid, bend-proof and backlash-free connection between the tube elements is obtained, i.e. in the locked state there is no or essentially no wobbling of the tube elements. The stop portions provide means for driving further tube elements located between the outer and the inner tube elements when rotating or twisting said tube elements because when said stop portions abut against each other, the further tube elements are rotated or twisted thereby locking/unlocking the coupling between the further tube element and the outer/inner tube element. In other words, due to the stop portions, by rotating the outer and the inner tube element against each other, all couplings between tube elements of the telescopic tube can be unlocked, respectively, locked.

According to the invention, in the locked, clamped state there is a form fit between a recess or groove provided within the first protrusion and the portion of the second protrusion forming the second clamping surface. The second clamping surface is provided at least partially on top of said second protrusion. More in detail, by rotating or twisting the tube elements against each other (from unlocked state into the locked state), at least a portion of the second protrusion comprising the second clamping surface is inserted in at least one recess or groove provided in the first protrusion. Thereby, the clamping surfaces abut against each other and when further rotating or twisting the tube elements against each other, the clamping surfaces are clamped against each other. The width of the recess or groove may be adapted to the width of the portion of the second protrusion being inserted into said recess or groove such that a lateral form-fit (i.e. in axial direction of the tube elements) between the recess or groove and at least one portion of the second protrusion is obtained. Thereby, the telescopic tube is adapted to withstand a high axial load, for example caused by a high liquid pressure within the telescopic tube.

According to another embodiment, in the clamped state there is a form fit between the portion of the first protrusion forming the first clamping surface and a recess or groove provided in the second protrusion. In other words, there can be also a vice versa - configuration wherein the second protrusion provided at the inner tube element comprises said recess or groove and the first protrusion provided at the outer tube element comprises a first protrusion forming the first clamping surface at least partially on top of said first protrusion.

Preferably, the first and/or second clamping surface comprises an eccentric shape. For example, the clamping surface provided at the top portion of the first or second protrusion may be circumferentially arranged wherein the radial distance between the centre of the cross section of the tube element comprising said protrusion changes along said circumferentially arranged clamping surface. Thereby, an effective clamping mechanism is obtained which can be manufactured easily and cost-effectively.

According to an embodiment, the depth of the at least one recess or groove decreases from a first groove end to a second groove end and/or the height of the first or second protrusion increases from a first protrusion end to a second protrusion end. In other words, the recess or groove, respectively, the first or second protrusion comprises a tapered shape. Thereby, an effective clamping between the tube elements is obtained.

According to an embodiment, the first protrusion comprises a plurality of grooves (also referred to as recesses) and first clamping surfaces are formed at the bottom surfaces of said grooves. By means of said plurality of grooves, an effective clamping and form-fit between adjacent tube elements is obtained.

According to an embodiment, the second protrusion comprises a plurality of grooves (also referred to as recesses) and second clamping surfaces are formed at the bottom surfaces of said grooves. In other words, the second protrusion comprises at least partially a comb-like shape forming said webs and/or grooves. By means of said plurality of grooves, an effective clamping and form-fit between adjacent tube elements is obtained.

According to an embodiment, the first protrusion comprises a plurality of webs (also referred to as rips) and first clamping surfaces are formed at the top surfaces of said webs. Further, the second protrusion comprises a plurality of webs (also referred to as rips) and said second clamping surfaces are formed at the top surfaces of said webs.

According to an embodiment, the first protrusion includes a first protrusion portion comprising said grooves and a second, solid protrusion portion wherein the second, solid protrusion portion builds said first stop portion. In other words, the stop portion and the protrusion comprising the grooves are formed by the same protrusion, namely the first protrusion. The stop portion may be arranged at a protrusion portion opposite to the protrusion portion comprising the grooves. Thereby, a simple structure of the tube element is obtained.

According to an embodiment, the free ends of the webs of the second protrusion build the second stop portion. In the unlocked state, at least some of said free ends may rest against the first stop portion and thereby block a further rotation/twisting of the tube elements.

According to an embodiment, multiple first protrusions are circumferentially distributed at the inner wall side of the outer tube element, wherein the dimensions of the gaps between adjacent first protrusions are adapted to the circumferential distribution and dimensions of multiple second protrusions provided at the outer wall side of the inner tube element such that the inner tube element is axially displaceable with respect to the outer tube element in the unlocked state. In other words, in case that the tube elements comprise a rotation position such that the second protrusions are located (in circumferential direction) in said gaps provided at the inner wall side of the outer tube element, the telescopic tube is telescopable. Due to the usage of multiple circumferentially distributed protrusions, the coupling between the tube elements is increased.

According to an embodiment, the second protrusion comprising a plurality of webs extends axially along the whole axial length or essentially the whole axial length of the inner tube element. Thereby, the adjustability of length of the telescopic tube is significantly increased.

According to an embodiment, a spring is operably arranged between the first and second protrusion in order to maintain the clamped state or at least in order to maintain an engagement of the second protrusion within the recess or groove provided in the first protrusion or in order to maintain an engagement of the first protrusion within the recess or groove provided in the second protrusion. The spring may be a leg spring. Said spring may be made of spring steel or plastic. Thereby, an undesired extension of the telescopic tube, for example when applying high liquid pressure to the telescopic tube is obtained.

According to an embodiment, the second, solid protrusion portion of the first protrusion comprises an end portion with an at least partially slanted edge. Said edge may be slanted with respect to the longitudinal axis of the telescopic tube by an angle α, wherein α is in the range between 30° and 60°, preferably between 40° and 50°, most preferably equal or essentially equal to 45°. The angle α may open towards the free end of the tube element adjacent to the slanted edge. Thereby a self-cleaning mechanism for removing dust is obtained in order to clean the gap between the stop portions which exists in the locked state of the telescopic tube.

According to another embodiment, there is a sealing element between the outer and the inner tube element in order to provide a liquid-tight transition between the interior of the outer tube element and the inner tube element. Thereby, the telescopic tube may be used as liquid guide, for example, for spraying apparatuses.

According to a further aspect, a bellows is arranged within the inner tube element in order to provide a liquid channel through said telescopic tube. Said bellow is advantageous because of its robustness, great liquid tightness, frost robustness and dirt resistance. Also, angel adjustable coupling means may be bridged by said bellows. By means of said bellows, sealing elements between the tube elements for achieving a liquid tightness of the telescopic tube are not required.

According to a further aspect, the invention relates to a spraying apparatus, specifically to a hand-held spraying apparatus, e.g. a spray gun. Said spraying apparatus may comprise a telescopic tube as described before. Specifically, the telescopic tube may be arranged between the hand portion and a spray head of the spraying apparatus.

According to yet a further aspect, the invention relates to a telescopic tube may comprise at least an outer and an inner tube element. Said outer tube element may comprise at least one first clamping surface, said first clamping surface being arranged on top of a first protrusion. Said first protrusion may be provided at the inner wall side of the outer tube element. In addition, the inner tube element may comprise at least one second clamping surface, said second clamping surface being arranged on top of at least one second protrusion. Said second protrusion may be provided at the outer wall side of the inner tube element. Furthermore, said second protrusion may be formed by an elastically deformable material layer. Said second clamping surface may be adapted to interact with the first clamping surface such that the tube elements are fixed against each other by clamping in a first turning position of the outer tube element with respect to the inner tube element and are telescopable in a second turning position of the outer tube element with respect to the inner tube element, Said clamping in said first turning position may be obtained by pushing said first protrusion into said elastically deformable second protrusion when rotating the outer and an inner tube elements against each other from the second turning position into the first turning position. In other words, the clamping of the inner and outer tube element may be obtained by pushing one or more first protrusions into the elastically deformable material layer forming the second protrusion. Thereby, in the clamped state, a form-fit may be obtained by one or more first protrusions embedded into the elastically deformable material of the second protrusion.

According to some embodiments, the telescopic tube comprising upper-mentioned elastically deformable second protrusion, a first stop portion may be provided at the inner wall side of the outer tube element, said first stop portion interacting with a second stop portion provided at the outer wall side of the inner tube element, said stop portions providing stop means to limit the angle of rotation by which the tube elements may be rotated relative to each other.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example sectional view of a telescopic tube;
- Fig. 2: shows the free ends of an inner and an outer tube element in an unlocked state;
- Fig. 3: shows the free ends of an inner and an outer tube element in a locked state;
- Fig. 4: shows a front-side view of an inner and an outer tube element in an unlocked state;
- Fig. 5: shows a front-side view of an inner and an outer tube element in a locked state;
- Fig. 6a, 6b: shows a top view of the free ends of the tube elements comprising a lock mechanism including a spring in the unlocked/locked state;
- Fig. 7a, 7b: shows a top view of the free ends of the tube elements comprising a self-cleaning mechanism with a slanted edge in order to remove dust;
- Fig. 8: shows a spraying apparatus comprising a telescopic tube in an extended state; and
- Fig. 9: shows a spraying apparatus comprising a telescopic tube with tube elements inserted into each other.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

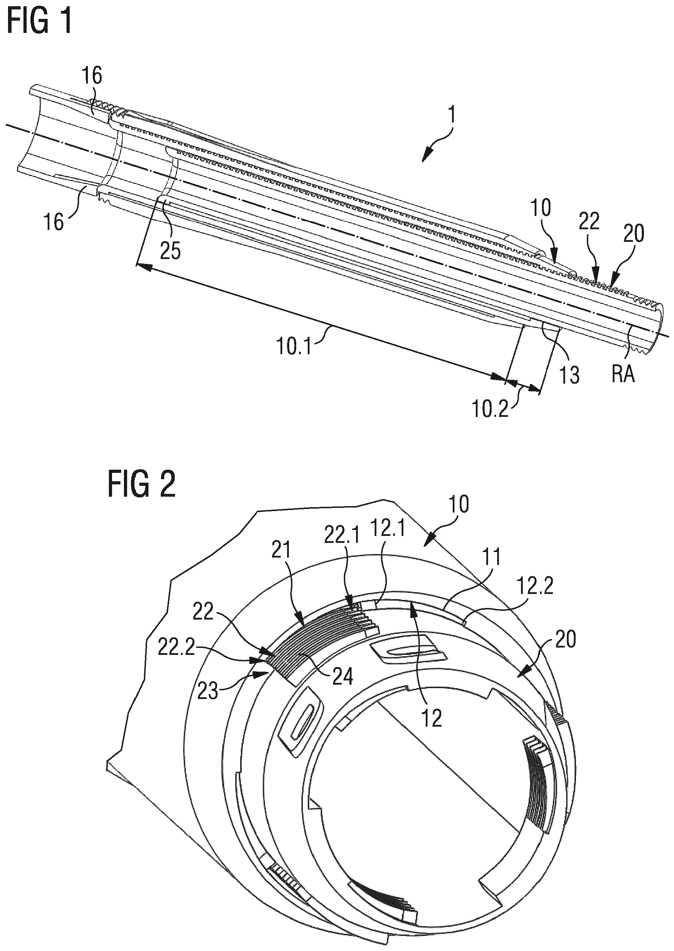

Fig. 1 shows a telescopic tube 1 according to an embodiment. The telescopic tube 1 comprises at least two, according to the present embodiment three tube elements, namely at least an outer tube element 10 and an inner tube element 20. The outer tube element 10 comprises an inner diameter which is adapted to the outer diameter of the inner tube element 20 in order to enable a telescopic movement of the inner tube element 20 with respect to the outer tube element 10.

More in detail, the outer tube element 10 comprises a pipe-shaped first tube portion 10.1 with a circular aperture. At the free end, the outer tube element 10 comprises a second tube portion 10.2. At the inner wall side of the second tube portion 10.2 multiple first protrusions 13 are provided. Said first protrusions 13 are circumferentially distributed along the inner circumference of said second tube portion 10.2. Between two consecutive first protrusions 13 (consecutive in the circumferential direction), a gap 15 is provided. Said gap 15 is dimensioned such that a second protrusion 22 provided at the outer wall side of the inner tube element 20 can pass through said gap 15 in order to adapt the length of the telescopic tube 1.

The inner tube element 20 comprises a tube wall with a circular cross shape, wherein at the outer wall side multiple second protrusions 22 are provided. Said second protrusions 22 are circumferentially distributed along the outer circumference of said inner tube element 20 similar to the gaps 15 provided at the outer tube element 10 in order to fit into said gaps 15. Said second protrusions 22 (in the current embodiment comprising a plurality of webs) comprise a longitudinal shape and extends along the whole or essentially the whole tube element 20. There may be no second protrusions 22 provided in a front portion of the tube element 20 in order to simplify inserting the inner tube element 20 in the outer tube element 10.

At the rear end of the inner tube element 20 a ring-shaped stop portion 25 is provided which radially protrudes from the outer wall side of the inner tube element 20. Said ring-shaped stop portion 25 is adapted to the inner diameter of the outer tube element 10 such that the stop portion 25 may pass through the aperture provided in the first tube portion 10.1 and is blocked by the first protrusions 13 in the area of the second tube portion 10.2.

Furthermore, snap-in-hooks 16 may be provided at least at the outer tube element 10, said snap-in-hooks being adapted to prevent a drop-out of the inner tube element 20 to the rear side. In addition, one or more sealing members may be provided between the inner and outer tube element 10, 20 in order to avoid penetration of dirt in the space between the inner and outer tube elements 10, 20.

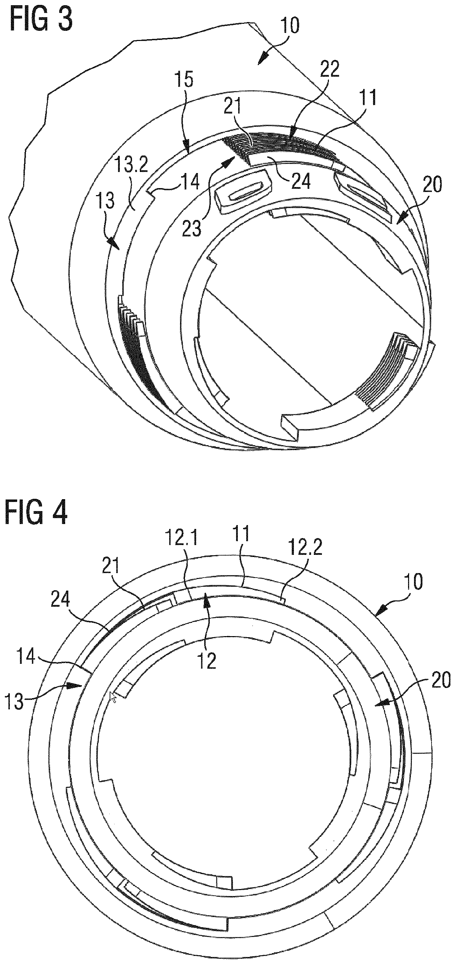

As shown in Fig. 2 and Fig. 3, the first and second protrusions 13, 22 comprise a textured shape. Specifically, the first protrusion provided at the inner wall side of the outer tube element 10 comprises at least one, preferably multiple grooves 12 or recesses. Said grooves 12 or recesses are oriented in a direction perpendicular to the axial direction of the outer tube element 10. More in detail, the grooves 12 or recesses are circumferentially oriented with respect to the axial direction of the outer tube element 10.

The grooves 12 or recesses comprise a location-dependent depth, wherein the depth decreases from a first groove end 12.1 to a second groove end 12.2. In other words, each groove 12 comprise a groove opening at a side edge of the first protrusion 13 (first groove end) in direct proximity to said gap 15, wherein the depth of the groove or recess decreases with increasing grove length, respectively, with increasing distance to said gap 15. In yet other words, the grooves 12 have a tapered shape. The grooves 12 provided in the first protrusion 12 are parallel to each other and comprise a comb-like shape. Preferably, the longitudinal direction of the grooves may be perpendicular to the axial direction of the outer tube element.

In order to provide a form-fit between the grooves provided in the first protrusion 13 and the second protrusion 22, said second protrusion 22 is inversely shaped to the at least one groove 12 within the first protrusion 13. Preferably, the second protrusion 22 is formed by a plurality of webs 24, in the following also called ribs. Said webs 24 may be parallel with respect to each other wherein the webs 24 are orientated perpendicular to the longitudinal axis of the inner tube element 20. Preferably, the distance between two consecutive webs 24 is equal to the distance of two consecutive grooves 12 or recesses. Thereby, when rotating the inner tube element 20 with respect to the outer tube element 10, each groove 12 provided in the first protrusion 13 receives one web 24 provided at the second protrusion 22 thereby blocking the telescopic function of the telescopic tube 1.

In order to achieve a clamping between the inner tube element 20 and the outer tube element 10, the second protrusion 22, specifically the webs 24 building the second protrusion 22 have a tapered shape. Specifically, the height of the webs 24 is increasing from a first end to a second end of the respective web 24. In other words, the upper surface of the web is eccentric with respect to the rotation axis RA around which the inner tube element 20 is rotatable when inserted in the outer tube element 10. The tapered shape of the webs 24 may correspond to the tapered shape of the grooves 12 or rips in order to achieve a clamping effect along the whole or essentially the whole web 24, respectively, groove 12. So, the shape of the first clamping surface 11 provided within the groove 12 corresponds to the shape of the second clamping surface 21 in order to achieve a form-fitting connection between said clamping surfaces over a large area.

In order to customize the length of the telescopic tube 1, the tube elements 10, 20 of the telescopic tube 1 has to be twisted such that the clamping function is deactivated and the webs 24 are not engaged with the grooves 12. In other words, the inner tube element 20 has to be twisted such that the at least one first protrusion 13 is located within the at least one gap 15 (see Fig. 2 and 4). In said twisting position, the inner tube element 20 can be moved with respect to the outer tube element 10 and the length of the telescopic tube 1 can be chosen as desired by the user. After customizing the length of the telescopic tube 1, the tube elements may be twisted against each other such that the webs 24 are inserted into the grooves 12 thereby fixing the length by a form-fit engagement of the webs 24 into the grooves 12 and the clamping function between the first and second clamping surfaces 11, 21. The twisting angle of the first and second tube elements 10, 20 may be in the range between 30° and 60°, preferably in the range between 40° and 50°, most preferably 45°.

In order to enable a technically simple and intuitive handling of the telescopic tube 1, at least one first stop portion 14 is provided at the inner wall surface of the outer tube element 10. Said first stop portion 14 may be adapted to interact with the second protrusion 22 of the inner tube element 20 in order to delimit the twisting angle of the inner tube element 20 with respect to the outer tube element 10. There may be multiple first stop portions 14 at the inner wall side of the outer tube element 10 wherein each first stop portion 14 is correlated with a first protrusion 13 provided at said inner wall side of the outer tube element 10. Said first stop portion 14 may form an integral part of a first protrusion 13 or may be formed by a separate protrusion. Said first stop portion 14 may have opposite edges or sides, wherein a first edge or side of said first stop portion 14 may border one of the gaps 15 provided at the inner wall side of the outer tube element 10 and a second edge or side of said first stop portion 14 may delimit the grooves 12 provided in the first protrusion 13. According to the present embodiment, the first protrusion 13 comprises a first and a second protrusion portion 13.1, 13.2, wherein the first protrusion portion 13.1 comprises the at least one groove 12 including the first clamping surface 11 and the second protrusion portion 13.2 forms said first stop portion 14. In other words, the first stop portion 14 is an integral part of the first protrusion 13.

The gaps 15 are formed between the free end of the second protrusion portion 13.2 and the free end of first protrusion portion 13.1 of the circumferentially following first protrusion 13.

The first stop portion 14 may interact with at least one second stop portion 23 provided at the outer wall side of the inner tube element 20 such, that said second stop portion 23 adjoins the first stop portion 14 in the unlocked state of the telescopic tube 1 (Fig. 2, Fig. 4). So, the interaction of first and second stop portion 14 provides a twisting limit which indicates the user that the unlocked state is reached and the length of the telescopic tube can be varied. Furthermore, in case that three or more tube elements form the telescopic tube 1, by twisting the outermost and the innermost tube elements against each other, also the at least one further tube element which is arranged between the outermost and the innermost tube element can be also transferred from the locked state to the unlocked state by means of said first stop portion 14. The second stop portion 23 may be provided by the free ends of the webs 24.

In case that the telescopic tube 1 comprises three or more tube elements, the intermediate tube elements (being enclosed at the inner and outer wall side by further tube elements) comprise at least a first clamping surface 11 at the outer wall side and at least a second clamping surface 21 at the inner wall side.

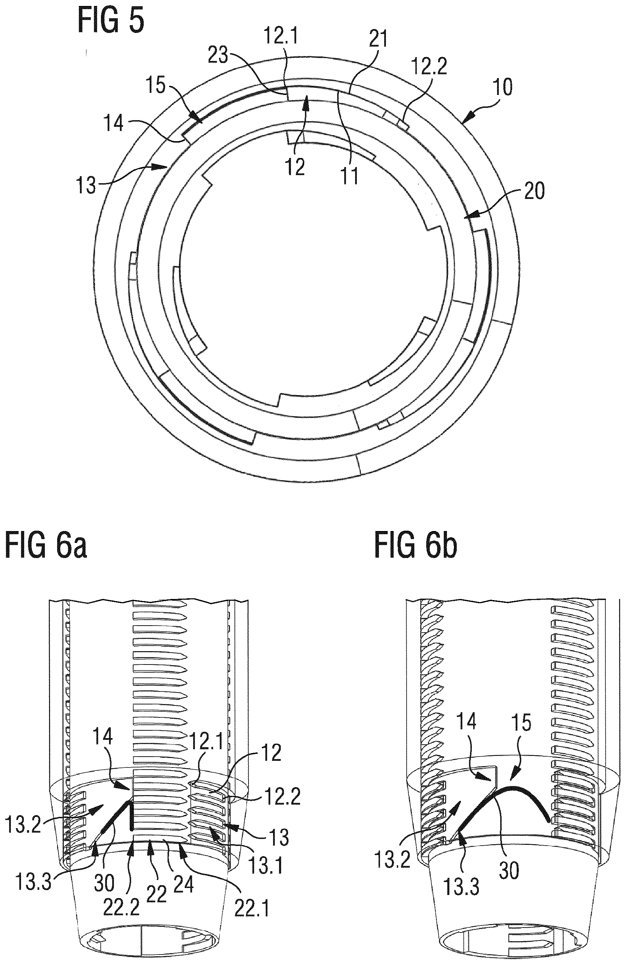

Fig. 6a and Fig. 6b show a preferred embodiment wherein between the first protrusion 13 (provided at the inner wall surface of the outer tube element 10) and the second protrusion 22 (provided at the outer wall surface of the inner tube element 20) a spring 30 is arranged. Said spring 30 may be, for example a reversibly deformable spring element wherein a first end of said spring element braces against a lateral surface of the first protrusion 13 and a second end of said spring element braces against a lateral surface of the first protrusion 22. For example, the spring 30 may be a leg spring, preferably a plastic spring. More in detail, the spring 30 comprises two spring portions at its free ends wherein said free ends are coupled by means of a flexible, reversibly deformable middle portion. A first free end of the spring 30 rests against the second protrusion portion 13.2 forming at least partially the first stop portion 14 and the second free end of the spring 30 rests against one or more free ends of the webs 24.

By means of said spring 30, without applying external force to the telescopic tube 1, the telescopic tube 1 is maintained in the locked state, i.e. by means of the spring force of spring 30, the outer tube element 10 is kept in a twisting state with respect to the inner tube element 20 such that the webs 24 of the inner tube element 20 are at least partially inserted into the grooves 12 of the outer tube element 10. Thereby, an undesired, uncontrollable extension of length of the telescopic tube in case of high water or air pressure provided within the telescopic tube 1 is avoided.

Preferably, the first stop portion 14 comprises a slanted edge 13.3, wherein the angle α between the slanted edge and the longitudinal axis of the first tube element is in the range between 30° and 60°, preferably between 40° and 50°, most preferably about 45° and wherein the angle α opens towards the free end of the tube element adjacent to the slanted edge 13.3. A first spring portion may rest against said slanted edge 13.3.

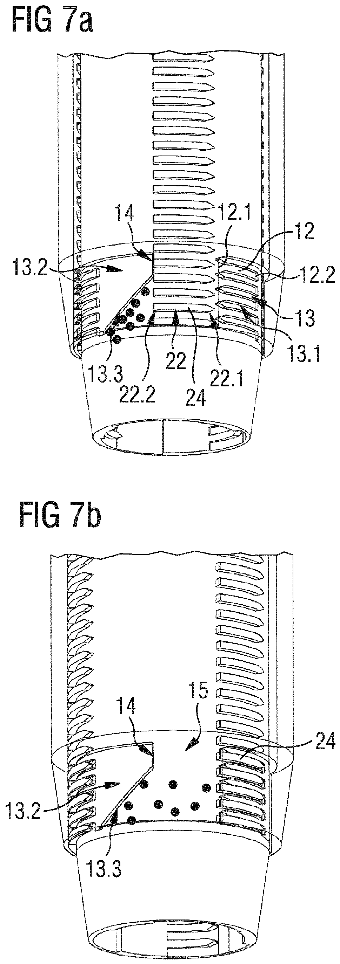

As shown in Fig. 7a and Fig. 7b, the slanted edge 13.3 enables a self-cleaning of the lock mechanism of the telescopic tube 1. In case that dirt enters into the lock mechanism between the free ends of the webs 24 and the first stop portion 14 (Fig. 7b), said dirt may block the twisting of the tube elements in order to unlock the telescopic tube 1. By means of the slanted edge 13.3, dirt located between the free ends of the webs 24 and the slanted edge 13.3 is pushed outwardly, thereby self-cleaning the orifice formed between the free ends of the webs 24 and the slanted edge 13.3.

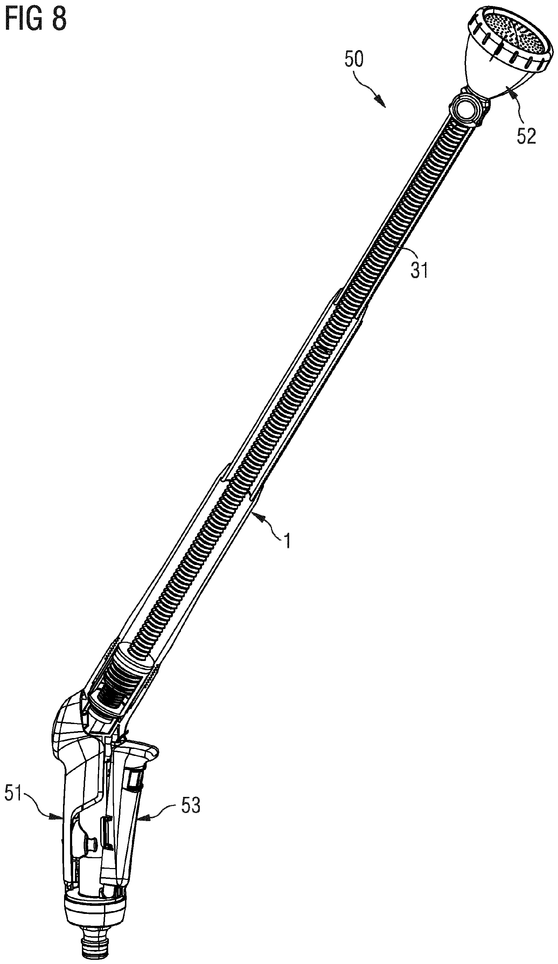

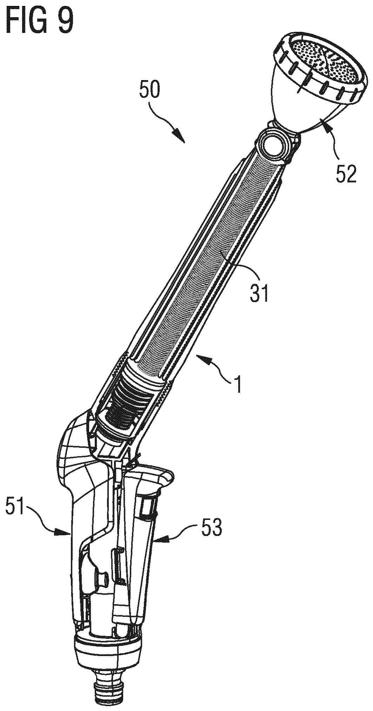

According to an embodiment, the telescopic tube 1 may be used as an integral part of a spraying apparatus 50 for providing liquid, specifically water to water receiving objects, for example, flowers or plants. Such spraying apparatus 50 is shown in Fig. 8 and 9. The telescopic tube 1 may be arranged between a grip portion 51 and a spray head 52 forming the liquid outlet of the spraying apparatus 50. According to a first embodiment, the liquid is guided within a pipe included in the interior of the telescopic tube. Said pipe may be a bellows 31 which is length-extendible due to its accordion-shaped wall. Due to the bellows 31, a liquid-tight and frost-proof guiding of liquid through the telescopic tube 1 is achieved. Furthermore, the spray head 52 may be directly connected to said bellows 31 wherein due to said bellows 31 a swivel joint (located between the telescopic tube 1 and the spray head 52) is achieved without extra liquid sealing.

According to another embodiment, the liquid can be guided directly through the interior of said telescopic tube 1 wherein the tube elements 10, 20 are sealed to each other by sealing means, e.g. sealing elements, for example lip seals, O-rings etc.

The spraying apparatus 50 may be a handheld device, e.g. a spray gun, for providing liquid, specifically water to water receiving objects, for example, flowers or plants. The spraying apparatus 50 comprises a housing with a grip portion 51 for manually holding the spraying apparatus 50. The spraying apparatus 50 may further comprise activation means 53, for example a button, said activation means 53 being coupled with a valve (not shown) for enabling/disabling or controlling a liquid flow through the spraying apparatus 50.

Preferably, the tube elements including the protrusions forming the clamping surfaces may be integrally formed (one-piece tube elements). The tube elements may be formed by injection molding or the like. The tube elements may be made of plastics, cast iron or metal.

According to the upper-mentioned embodiments, it has been assumed that the second protrusion 22 provided at the inner tube element 20 is integrally formed at the outer surface of the inner tube element 20, is made of a rigid material and comprises a plurality of webs 24 which are received by corresponding grooves 12 provided at the outer tube element. According to another embodiment, the second protrusion 22 may be formed by a layer of elastic material. For example, said elastic material may be a elastomer, specifically an elastic polymer. Said second protrusion 22 may not comprise any grooves or webs. In other words, the second protrusion 22 may comprise an non-contoured surface. Apart from that, the second protrusion 22 may comprise a shape as disclosed in the context of the above-described embodiments. Specifically, the second protrusion end 22.2 of the second protrusion 22 may form a stop portion, several second protrusions 22 may be arranged at the outer circumference of the inner tube element 20 and the second protrusion(s) 22 may extend in parallel to the longitudinal axis of the inner tube 20. In addition, the second protrusion 22 may comprise a tapered shape, specifically, the thickness of the second protrusion 22 may increase from the first protrusion end 22.1 to the second protrusion end 22.2. The outer tube element 10 of the telescopic tube may be configured according to the upper-mentioned embodiments.

The clamping between the outer tube element 10 and the inner tube element 20 is obtained by rotating the tube elements 10, 20 against each other. Due to said rotation, webs or protrusions provided at the inner surface of the outer tube element 10 may be pushed into the elastic material of the second protrusion 22. In other words, said webs or protrusions may deform the second protrusion 22 thereby causing a form-fit between outer tube element 10 and the inner tube element 20. Due to said form-fit, an interlocking between the outer tube element 10 and the inner tube element 20 is obtained and the telescopic function of the telescopic tube 1 is disabled.

It should be noted that the description and drawings merely illustrate the principles of the proposed methods and systems.

### List of reference numerals

- 1: telescopic tube
- 10: outer tube element
- 10.1: first tube portion
- 10.2: second tube portion
- 11: first clamping surface
- 12: groove
- 12.1: first groove end
- 12.2: second groove end
- 13: first protrusion
- 13.1: first protrusion portion
- 13.2: second protrusion portion
- 13.3: slanted edge
- 14: first stop portion
- 15: gap
- 16: snap-in-hook
- 20: inner tube element
- 21: second clamping surface
- 22: second protrusion
- 22.1: first protrusion end
- 22.2: second protrusion end
- 23: second stop portion
- 24: web
- 25: stop portion
- 30: spring
- 31: bellows

- 50: spraying apparatus
- 51: grip portion
- 52: spray head
- 53: activation means

- RA: rotation axis

## Claims

1. A telescopic tube (1) comprising:
an outer tube element (10) having an inner surface, wherein the inner surface defines:
at least one first protrusion (13) circumferentially extending at least partially along the inner surface; and
a first clamping surface (11) being arranged in a recess or groove (12) within the at least one first protrusion or on top of said at least one first protrusion; and
an inner tube element (20) having an outer surface, wherein the outer surface defines:
at least one second protrusion (22) circumferentially extending at least partially along the outer surface; and
a second clamping surface (21) being arranged in a recess or groove within the at least one second protrusion or on top of said at least one second protrusion;
wherein the outer tube element (10) and the inner tube element (20) are fixed against each other by clamping in a first turning position of the outer tube element with respect to the inner tube element; and
wherein the outer tube element (10) is telescopable relative to the inner tube element (20) in a second turning position of the outer tube element with respect to the inner tube element;
**characterized in that:**
if the first clamping surface (11) is arranged in the recess or groove (12) within the first protrusion, the second clamping surface (21) is arranged on top of the second protrusion;
whereas if the first clamping surface (11) is arranged on top of the first protrusion, the second clamping surface (21) is arranged in the recess or groove within the second protrusion;
the first clamping surface (11) engages with the second clamping surface (21) in the first turning position of the outer tube element such that the at least one first protrusion and the at least one second protrusion are disposed in an alternating manner adjacent to each other providing a form fit between the outer tube and the inner tube; and
the telescopic tube (1) further comprising a first stop portion (14) provided at the inner wall side of the outer tube element, said first stop portion interacting with a second stop portion (23) provided at the outer wall side of the inner tube element, said stop portions providing stop means to limit the angle of rotation by which the tube elements can be rotated relative to each other.

2. Telescopic tube according to claim 1, wherein in the clamped state there is a form fit between a recess or groove (12) provided within the first protrusion (13) and the portion of the second protrusion (22) forming the second clamping surface (21) or in the clamped state there is a form fit between the portion of the first protrusion (13) forming the first clamping surface (11) and a recess or groove provided in the second protrusion (22).

3. Telescopic tube according to anyone of the preceding claims, wherein the depth of the at least one recess or groove (12) decreases from a first groove end (12.1) to a second groove end (12.2) and the height of the first or second protrusion (13, 22) increases from a first protrusion end (22.1) to a second protrusion end (22.2).

4. Telescopic tube according to anyone of the preceding claims, wherein the depth of the at least one recess or groove (12) decreases from a first groove end (12.1) to a second groove end (12.2) or the height of the first or second protrusion (13, 22) increases from a first protrusion end (22.1) to a second protrusion end (22.2).

5. Telescopic tube according to anyone of the preceding claims, wherein the first protrusion (13) comprises a plurality of recesses or grooves (12) and first clamping surfaces (11) are formed at the bottom surfaces of said recesses or grooves (12) .

6. Telescopic tube according to anyone of the claims 1 or 4 to 5, wherein the second protrusion (22) comprises plurality of recesses or grooves and second clamping surfaces (21) are formed at the bottom surfaces of said recesses or grooves.

7. Telescopic tube according to anyone of the claims 1 or 4 to 6, wherein the first protrusion (13) comprises a plurality of webs and first clamping surfaces (11) are formed at the top surfaces of said webs, and the second protrusion (22) comprises a plurality of webs (24) and said second clamping surfaces (21) are formed at the top surfaces of said webs (24) .

8. Telescopic tube according to claim 7, wherein the free ends of the webs (24) build the second stop portion (23).

9. Telescopic tube according to anyone of the preceding claims, wherein multiple first protrusions (13) are circumferentially distributed at the inner wall side of the outer tube element (13), wherein the dimensions of the gaps between adjacent first protrusions (13) are adapted to the circumferential distribution and dimensions of multiple second protrusions (22) provided at the outer wall side of the inner tube element (20) such that the inner tube element (20) is axially displaceable with respect to the outer tube element (10).

10. Telescopic tube according to anyone of the preceding claims, wherein the second protrusion (22) comprises a plurality of webs extends axially along the whole or essentially the whole axial length of the inner tube element (20).

11. Telescopic tube according to anyone of the preceding claims, wherein a spring (30) is operably arranged between the first and second protrusion (13, 22) in order to maintain the clamped state or at least in order to maintain an engagement of the second protrusion (22) within the recess or groove (12) provided in the first protrusion (13) or in order to maintain an engagement of the first protrusion (13) within the recess or groove provided in the second protrusion (22).

12. Telescopic tube according to anyone of the preceding claims, wherein there is a sealing element between the outer and the inner tube element (10, 20) in order to provide a liquid-tight transition between the interior of the outer tube element (10) and the inner tube element (20).

13. Telescopic tube according to anyone of the preceding claims, wherein a bellows (31) is arranged within the inner tube element (20) in order to provide a liquid channel through said telescopic tube.

14. Spraying apparatus comprising a telescopic tube according to anyone of the preceding claims.

## Patentansprüche

1. Teleskoprohr (1), umfassend:
ein Rohraußenelement (10) mit einer Innenfläche, wobei die Innenfläche folgendes definiert:
mindestens einen ersten Vorsprung (13), der sich in Umfangsrichtung mindestens teilweise entlang der Innenfläche erstreckt; und
eine erste Klemmfläche (11), die in einer Vertiefung oder Nut (12) innerhalb des mindestens einen ersten Vorsprungs oder auf dem mindestens einen ersten Vorsprung angeordnet ist; und
ein Rohrinnenelement (20) mit einer Außenfläche, wobei die Außenfläche folgendes definiert:
mindestens einen zweiten Vorsprung (22), der sich in Umfangsrichtung zumindest teilweise entlang der Außenfläche erstreckt; und
eine zweite Klemmfläche (21), die in einer Vertiefung oder Nut innerhalb des mindestens einen zweiten Vorsprungs oder oben auf dem mindestens einen zweiten Vorsprung angeordnet ist;
wobei das Rohraußenelement (10) und das Rohrinnenelement (20) durch Klemmen in einer ersten Drehposition des Rohraußenelements in Bezug auf das Rohrinnenelement aneinander befestigt sind; und
wobei das Rohraußenelement (10) in einer zweiten Drehposition des Rohraußenelements gegenüber dem Rohrinnenelement relativ zum Rohrinnenelement (20) teleskopierbar ist;
**dadurch gekennzeichnet, dass:**
wenn die erste Klemmfläche (11) in der Vertiefung oder Nut (12) innerhalb des ersten Vorsprungs angeordnet ist, die zweite Klemmfläche (21) auf dem zweiten Vorsprung angeordnet ist;
wobei, wenn die erste Klemmfläche (11) oben auf dem ersten Vorsprung angeordnet ist, die zweite Klemmfläche (21) in der Vertiefung oder Nut innerhalb des zweiten Vorsprungs angeordnet ist;
die erste Klemmfläche (11) in die zweite Klemmfläche (21) in der ersten Drehposition des Rohraußenelements eingreift, so dass der mindestens eine erste Vorsprung und der mindestens eine zweite Vorsprung abwechselnd nebeneinander angeordnet sind und einen Formschluss zwischen dem Rohräußeren und dem Rohrinneren bilden; und
das Teleskoprohr (1) ferner einen ersten Anschlagabschnitt (14) umfasst, der an der Innenwandseite des Rohraußenelements vorgesehen ist, wobei der erste Anschlagabschnitt mit einem zweiten Anschlagabschnitt (23) zusammenwirkt, der an der Außenwandseite des Rohrinnenelements vorgesehen ist, wobei die Anschlagabschnitte Anschlagmittel aufweisen, um den Drehwinkel zu begrenzen, um den die Rohrelemente relativ zueinander gedreht werden können.

2. Teleskoprohr nach Anspruch 1, wobei im eingespannten Zustand ein Formschluss zwischen einer im ersten Vorsprung (13) vorgesehenen Vertiefung oder Nut (12) und dem die zweite Klemmfläche (21) bildenden Abschnitt des zweiten Vorsprungs (22) besteht oder im eingespannten Zustand ein Formschluss zwischen dem die erste Klemmfläche (11) bildenden Abschnitt des ersten Vorsprungs (13) und einer im zweiten Vorsprung (22) vorgesehenen Vertiefung oder Nut besteht.

3. Teleskoprohr nach einem der vorhergehenden Ansprüche, wobei die Tiefe der mindestens einen Vertiefung oder Nut (12) von einem ersten Vertiefungsende (12.1) zu einem zweiten Vertiefungsende (12.2) abnimmt und die Höhe des ersten oder zweiten Vorsprungs (13, 22) von einem ersten Vorsprungende (22.1) zu einem zweiten Vorsprungende (22.2) zunimmt.

4. Teleskoprohr nach einem der vorhergehenden Ansprüche, wobei die Tiefe der mindestens einen Vertiefung oder Nut (12) von einem ersten Vertiefungsende (12.1) zu einem zweiten Vertiefungsende (12.2) abnimmt und die Höhe des ersten oder zweiten Vorsprungs (13, 22) von einem ersten Vorsprungende (22.1) zu einem zweiten Vorsprungende (22.2) zunimmt.

5. Teleskoprohr nach einem der vorhergehenden Ansprüche, wobei der erste Vorsprung (13) eine Vielzahl von Vertiefungen oder Nuten (12) umfasst und erste Klemmflächen (11) an den Bodenflächen der Vertiefungen oder Nuten (12) ausgebildet sind.

6. Teleskoprohr nach einem der Ansprüche 1 oder 4 bis 5, wobei der zweite Vorsprung (22) eine Vielzahl von Vertiefungen oder Nuten umfasst und an den Bodenflächen der Vertiefungen oder Nuten zweite Klemmflächen (21) ausgebildet sind.

7. Teleskoprohr nach einem der Ansprüche 1 oder 4 bis 6, wobei der erste Vorsprung (13) eine Vielzahl von Rippen umfasst und erste Klemmflächen (11) an den Oberseiten der Rippen ausgebildet sind, und der zweite Vorsprung (22) eine Vielzahl von Rippen (24) umfasst und die zweiten Klemmflächen (21) an den Oberseiten der Rippen (24) ausgebildet sind.

8. Teleskoprohr nach Anspruch 7, wobei die freien Enden der Rippen (24) den zweiten Anschlagabschnitt (23) bilden.

9. Teleskoprohr nach einem der vorhergehenden Ansprüche, wobei mehrere erste Vorsprünge (13) an der Innenwandseite des Rohraußenelements (10) umlaufend verteilt sind, wobei die Abmessungen der Lücken zwischen benachbarten ersten Vorsprüngen (13) an die umlaufende Verteilung und die Abmessungen mehrerer zweiter Vorsprünge (22), die an der Außenwandseite des Rohrinnenelements (20) vorgesehen sind, angepasst sind, so dass das Rohrinnenelement (20) in Bezug auf das Rohraußenelement (10) axial verschiebbar ist.

10. Teleskoprohr nach einem der vorhergehenden Ansprüche, wobei der zweite Vorsprung (22) eine Vielzahl von Rippen umfasst, die sich axial über die gesamte oder im Wesentlichen die gesamte axiale Länge des Rohrinnenelements (20) erstrecken.

11. Teleskoprohr nach einem der vorhergehenden Ansprüche, wobei zwischen dem ersten und zweiten Vorsprung (13, 22) eine Feder (30) zur Aufrechterhaltung des Klemmzustandes oder zumindest zur Aufrechterhaltung eines Eingriffs des zweiten Vorsprungs (22) in die im ersten Vorsprung (13) vorgesehene Vertiefung oder Nut (12) oder zur Aufrechterhaltung eines Eingriffs des ersten Vorsprungs (13) in die im zweiten Vorsprung (22) vorgesehene Vertiefung oder Nut funktionsfähig angeordnet ist.

12. Teleskoprohr nach einem der vorhergehenden Ansprüche, **dadurch gekennzeichnet, dass** zwischen dem Rohraußen- und dem Rohrinnenelement (10, 20) ein Dichtelement vorhanden ist, um einen flüssigkeitsdichten Übergang zwischen dem Innenraum des Rohraußenelementes (10) und dem Rohrinnenelement (20) herzustellen.

13. Teleskoprohr nach einem der vorhergehenden Ansprüche, wobei in dem Rohrinnenelement (20) ein Balg (31) angeordnet ist, um einen Flüssigkeitskanal durch das Teleskoprohr zu bilden.

14. Sprühgerät umfassend ein Teleskoprohr nach einem der vorhergehenden Ansprüche.

## Revendications

1. Tube télescopique (1) comprenant :
un élément de tube externe (10) ayant une surface interne, dans lequel la surface interne définit :
au moins une première saillie (13) s'étendant circonférentiellement au moins partiellement le long de la surface intérieure ; et
une première surface de serrage (11) étant disposée dans un évidement ou une rainure (12) à l'intérieur de la au moins une première saillie ou sur le dessus de ladite au moins une première saillie ; et
un élément de tube interne (20) ayant une surface externe, dans lequel la surface externe définit :
au moins une deuxième saillie (22) s'étendant circonférentiellement au moins partiellement le long de la surface extérieure ; et
une seconde surface de serrage (21) étant disposée dans un évidement ou une rainure à l'intérieur de la au moins une seconde saillie ou sur le dessus de ladite au moins une seconde saillie ;
dans lequel l'élément de tube extérieur (10) et l'élément de tube intérieur (20) sont fixés l'un contre l'autre par serrage dans une première position de rotation de l'élément de tube extérieur par rapport à l'élément de tube intérieur ; et
dans lequel l'élément de tube extérieur (10) est télescopique par rapport à l'élément de tube intérieur (20) dans une seconde position de rotation de l'élément de tube extérieur par rapport à l'élément de tube intérieur ;
**caractérisée en ce que** :
si la première surface de serrage (11) est disposée dans l'évidement ou la rainure (12) à l'intérieur de la première protubérance, la seconde surface de serrage (21) est disposée sur le dessus de la seconde protubérance ;
alors que
si la première surface de serrage (11) est disposée sur le dessus de la première saillie, la seconde surface de serrage (21) est disposée dans l'évidement ou la rainure à l'intérieur de la seconde saillie ;
la première surface de serrage (11) s'engage avec la seconde surface de serrage (21) dans la première position de rotation de l'élément de tube extérieur de sorte que la au moins une première saillie et la au moins une seconde saillie sont disposées de manière alternée adjacentes l'une à l'autre fournissant un ajustement de forme entre le tube extérieur et le tube intérieur ; et
le tube télescopique (1) comprenant en outre une première partie d'arrêt (14) prévue du côté de la paroi intérieure de l'élément de tube extérieur, ladite première partie d'arrêt interagissant avec une seconde partie d'arrêt (23) prévue du côté de la paroi extérieure de l'élément de tube intérieur, lesdites parties d'arrêt fournissant des moyens d'arrêt pour limiter l'angle de rotation selon lequel les éléments de tube peuvent être tournés l'un par rapport à l'autre.

2. Tube télescopique selon la revendication 1, dans lequel, à l'état serré, il y a un ajustement de forme entre un évidement ou une rainure (12) prévu dans la première saillie (13) et la partie de la seconde saillie (22) formant la seconde surface de serrage (21) ou, à l'état serré, il y a un ajustement de forme entre la partie de la première saillie (13) formant la première surface de serrage (11) et un évidement ou une rainure prévu dans la seconde saillie (22).

3. Tube télescopique selon l'une quelconque des revendications précédentes, dans lequel la profondeur de la au moins une cavité ou rainure (12) diminue d'une première extrémité de rainure (12.1) à une seconde extrémité de rainure (12.2) et la hauteur de la première ou seconde saillie (13, 22) augmente d'une première extrémité de saillie (22.1) à une seconde extrémité de saillie (22.2).

4. Tube télescopique selon l'une quelconque des revendications précédentes, dans lequel la profondeur du au moins un évidement ou une rainure (12) diminue d'une première extrémité de rainure (12.1) à une deuxième extrémité de rainure (12.2) ou la hauteur de la première ou deuxième saillie (13, 22) augmente d'une première extrémité de saillie (22.1) à une deuxième extrémité de saillie (22.2).

5. Tube télescopique selon l'une quelconque des revendications précédentes, dans lequel la première saillie (13) comprend une pluralité d'évidements ou de rainures (12) et des premières surfaces de serrage (11) sont formées au niveau des surfaces de fond desdits évidements ou rainures (12).

6. Tube télescopique selon l'une quelconque des revendications 1 ou 4 à 5, dans lequel la seconde saillie (22) comprend une pluralité d'évidements ou de rainures et des secondes surfaces de serrage (21) sont formées au niveau des surfaces de fond desdits évidements ou rainures.

7. Tube télescopique selon l'une quelconque des revendications 1 ou 4 à 6, dans lequel la première saillie (13) comprend une pluralité d'âmes et des premières surfaces de serrage (11) sont formées sur les surfaces supérieures desdites âmes, et la seconde saillie (22) comprend une pluralité d'âmes (24) et lesdites secondes surfaces de serrage (21) sont formées sur les surfaces supérieures desdites âmes (24).

8. Tube télescopique selon la revendication 7, dans lequel les extrémités libres des bandes (24) construisent la seconde partie d'arrêt (23).

9. Tube télescopique selon l'une quelconque des revendications précédentes, dans lequel de multiples premières saillies (13) sont réparties de manière circonférentielle sur le côté de la paroi intérieure de l'élément de tube extérieur (13), dans lequel les dimensions des espaces entre les premières saillies adjacentes (13) sont adaptées à la répartition circonférentielle et aux dimensions de multiples secondes saillies (22) prévues sur le côté de la paroi extérieure de l'élément de tube intérieur (20) de sorte que l'élément de tube intérieur (20) peut être déplacé axialement par rapport à l'élément de tube extérieur (10).

10. Tube télescopique selon l'une quelconque des revendications précédentes, dans lequel la seconde saillie (22) comprend une pluralité de bandes s'étendant axialement le long de la totalité ou essentiellement de la totalité de la longueur axiale de l'élément de tube interne (20).

11. Tube télescopique selon l'une quelconque des revendications précédentes, dans lequel un ressort (30) est agencé de manière opérationnelle entre la première et la deuxième saillie (13, 22) afin de maintenir l'état serré ou au moins afin de maintenir un engagement de la deuxième saillie (22) dans l'évidement ou la rainure (12) prévu dans la première saillie (13) ou afin de maintenir un engagement de la première saillie (13) dans l'évidement ou la rainure prévu dans la deuxième saillie (22).

12. Tube télescopique selon l'une quelconque des revendications précédentes, dans lequel il existe un élément d'étanchéité entre l'élément de tube extérieur et l'élément de tube intérieur (10, 20) afin de fournir une transition étanche aux liquides entre l'intérieur de l'élément de tube extérieur (10) et l'élément de tube intérieur (20).

13. Tube télescopique selon l'une quelconque des revendications précédentes, dans lequel un soufflet (31) est disposé à l'intérieur de l'élément de tube interne (20) afin de fournir un canal de liquide à travers ledit tube télescopique.

14. Appareil de pulvérisation comprenant un tube télescopique selon l'une quelconque des revendications précédentes.
